# FASCICULE DE BREVET EUROPEEN

(11) **EP 0 522 933 B1**
(45) Date de publication et mention de la délivrance du brevet: **09.03.1994**
(21) Numéro de dépôt: 92401886.4
(22) Date de dépôt: 02.07.1992
(51) Int. Cl.: G01P 3/487

(54) **Capteur de vitesse de rotation et palier à roulement équipé d'un tel capteur**
Drehzahlmessaufnehmer und Wälzlager, ausgerüstet mit einem solchen Aufnehmer
Angular velocity sensor and roller bearing equipped with such a sensor

(30) Priorité: 05.07.1991 FR 9108463
(43) Date de publication de la demande: 13.01.1993
(73) Titulaire: SKF FRANCE, F-92142 Clamart Cédex (FR)
(72) Inventeur: Rigaux, Christian, F-37260 Artannes-sur-Indre (FR); Lhote, Pascal, F-37540 Saint-Cyr-sur-Loire (FR)
(74) Mandataire: Casalonga, Axel

(56) Documents cités:
- EP-A- 0 464 405
- FR-A- 2 642 236
- US-A- 3 786 272
- US-A- 3 927 339
- US-A- 5 004 358

## Description

La présente invention concerne un dispositif de capteur de vitesse de rotation d'un organe tournant monté par l'intermédiaire d'un palier à roulement sur un organe non tournant, ledit dispositif comprenant un élément codeur solidaire de la bague tournante du palier pour produire un champ magnétique alterné et un élément capteur solidaire de la bague non tournante du palier et disposé en regard de l'élément codeur avec un entrefer. Un tel dispositif est divulgué par le document US-A-5 004 358.

On connaît par la demande de brevet français 2 263 518, un indicateur de nombre de tours pour la mesure de vitesse de rotation d'un rotor consistant à monter sur le rotor une bande circonférentielle magnétique avec des polarités alternées dans le sens circonférentiel, à monter un enroulement inductif sur le stator coaxialement au rotor et à monter sur chaque côté de l'enroulement une tôle conductrice dentée dont les dents sont tournées vers les pôles magnétiques du rotor, les deux rangées de dents se trouvant chaque fois en face des pôles magnétiques de polarité opposée de façon à former un concentrateur de flux magnétique pour l'enroulement d'induction. L'indicateur tel que décrit dans ce document serait difficile à intégrer dans un palier à roulement vu les contraintes dimensionnelles et l'étanchéité imposée par ce dernier. En outre, le nombre important de pièces constitutives de l'indicateur rend celui-ci onéreux à fabriquer et inapte à être logé dans un espace réduit dans un palier à roulement.

On connaît en outre par la demande de brevet français 2 642 483 un joint d'étanchéité tournant à codeur magnétique intégré pour un palier à roulement. Ce document montre un élément codeur sous forme d'un anneau multipolaire pourvu des moyens de retenue axiale, radiale et angulaire et d'une surface de butée coopérant avec la garniture d'un anneau support. Pour le positionnement axial précis de l'élément codeur, la bague tournante du palier possède des surfaces de butée spécialement aménagées, ce qui augmente sensiblement le coût de fabrication. L'élément capteur est monté fixe sur la bague non tournante axialement en regard de l'élément codeur avec un entrefer. Ce document ne donne aucune précision sur la structure de l'élément capteur.

Les dispositifs classiques de capteur de vitesse de rotation présentent certains inconvénients techniques et pratiques. Pour leur montage sur un palier à roulement, il est nécessaire de prévoir des usinages particuliers d'au moins une des bagues du palier à roulement de façon à assurer le montage précis du dispositif. Dans les systèmes connus utilisant comme élément codeur un anneau multipolaire simple, une partie des lignes de champ magnétique générées par ledit anneau n'est pas utilisée par le capteur. Il en est ainsi lorsque la partie active du capteur recevant les lignes de champ n'est en regard que d'une portion de l'élément codeur. Ceci peut être partiellement compensé par l'utilisation de concentrateurs de flux. Il existe également des phénomènes de déperdition des lignes de champ magnétique dans l'environnement immédiat de l'anneau multipolaire. Ces phénomènes se font au détriment de la puissance du signal recueilli au niveau du capteur.

L'objet de la présente invention est de remédier à ces inconvénients en proposant un dispositif de capteur de vitesse de rotation pour roulements fournissant un signal puissant grâce à une diminution des déperditions parasites des lignes de champ émises par l'élément codeur, et une circulation optimale desdites lignes de champ entre l'élément codeur et le concentrateur permettant un bon rebouclage desdites lignes.

L'invention a également pour objet un dispositif de capteur de vitesse de rotation dont tous les éléments peuvent être mis en place dans le palier à roulement de manière simple et précise, sans nécessiter d'usinage particulier sur le roulement, ces diverses améliorations étant obtenues sans augmentation d'encombrement et de coût de fabrication.

Le dispositif de capteur de vitesse de rotation pour palier à roulement, selon l'invention, comprend un élément codeur constitué par deux anneaux multipolaires concentriques à aimantation axiale, et un élément capteur constitué par une bobine d'induction coopérant avec un concentrateur de flux magnétique de forme annulaire, l'élément codeur et l'élément capteur étant disposés en regard axialement l'un de l'autre avec un entrefer.

De préférence, les deux anneaux multipolaires de l'élément codeur sont disposés sur une face radiale d'un support ferromagnétique monté fixe sur une partie tournante du palier à roulement. Le support peut être réalisé sous forme d'un flasque annulaire comportant sur sa périphérie interne ou externe une portée cylindrique pour être emmanchée sur la partie tournante du palier. Il est possible de réaliser un tel support de façon simple et économique par exemple par découpe et emboutissage à partir d'un feuillard de tôle.

Les deux anneaux multipolaires concentriques peuvent être fabriqués de façon très économique par surmoulage, en une seule opération sur le support, d'un élastomère ou d'une matière plastique chargé de particules de matière magnétisable telle que la ferrite. Lesdits anneaux multipolaires peuvent être complètement séparés l'un de l'autre ou comporter une zone de liaison non magnétisée pouvant servir par exemple à renforcer l'accrochage des anneaux sur le support. Il est possible d'obtenir la solidarisation entre les anneaux multipolaires et le support par l'intermédiaire de zones d'accrochage telles que des ouvertures ou trous dans le support.

La magnétisation des anneaux multipolaires en segments polarisés alternés circonférentiellement peut être réalisée après surmoulage sur le support en une seule opération au moyen d'un dispositif de bobinage d'induction. De manière avantageuse, les deux anneaux multipolaire présentent le même nombre de segments magnétisés qui sont répartis circonférentiellement de façon régulière sur chaque anneau. De plus, la disposition particulière de deux anneaux concentriques sur la même face d'un flasque est particulièrement adaptée à la magnétisation axiale de façon à rendre la magnétisation des anneaux particulièrement efficace.

L'élément codeur ainsi obtenu est facile à mettre en place et à positionner axialement sur une partie tournante du palier à roulement par un simple emmanchement, au moyen par exemple d'une presse avec l'outil de mise en place venant en butée axiale sur une face de référence choisie de la partie tournante du palier.

L'élément capteur est du type passif formé par une bobine d'induction coopérant avec un concentrateur de flux magnétique. Lorsque l'élément codeur est entraîné en rotation par la partie tournante du palier à roulement, le champ magnétique généré par les anneaux multipolaires et reçu par le capteur par l'intermédiaire du concentrateur de flux varie périodiquement avec une fréquence proportionnelle à la vitesse de rotation. L'élément capteur disposé en regard des anneaux multipolaires reçoit des lignes de champ magnétique par l'intermédiaire du concentrateur de flux magnétique.

Le concentrateur de flux sera réalisé de façon économique en une seule pièce sous une forme générale annulaire à partir d'une tôle en matériau ferromagnétique par découpe ou emboutissage. Le concentrateur comporte des organes destinés à collecter le flux magnétique et disposés axialement en regard des anneaux multipolaires avec un entrefer.

De façon avantageuse, le concentrateur est sous forme d'un flasque annulaire pourvu d'une âme radiale en forme de rondelle sensiblement plane d'où sont issus axialement ou radialement par usinage sans formation de copeaux (tels que découpe ou emboutissage) des dents destinées à collecter les lignes de champ magnétique émises par les anneaux multipolaires.

L'invention sera mieux comprise à l'étude de la description détaillée de quelques modes de réalisation pris à titre nullement limitatif et illustrés par les dessins annexés, sur lesquels :
la figure 1 est une vue d'ensemble en coupe axiale d'un moyeu de roue équipé du dispositif de capteur de l'invention;
la figure 2 est une vue de détail de la figure 1 montrant la structure du dispositif selon un mode de réalisation de l'invention;
la figure 3 est une vue schématique partielle des anneaux magnétiques multipolaires de l'élément codeur selon un mode de réalisation de l'invention;
les figures 4 et 5 montrent schématiquement des formes du concentrateur de flux magnétique adapté à l'élément codeur de la figure 3;
la figure 6 montre schématiquement une autre disposition des pôles magnétiques sur les anneaux multipolaires de l'élément codeur;
la figure 7 montre une forme du concentrateur de flux adapté à la configuration des anneaux multipolaires montrés sur la figure 6;
la figure 8 est une vue de détail de la figure 1 selon un autre mode de réalisation de l'invention;
les figures 9 et 10 montrent deux formes du concentrateur de flux adaptés pour le mode de réalisation monté sur la figure 8;
la figure 11 est une vue de détail pour un autre mode de réalisation du dispositif de l'invention;
les figures 12 et 13 montrent schématiquement l'élément codeur avec les anneaux multipolaires surmoulés sur le support;
les figures 14 et 15 montrent schématiquement la répartition des lignes de champ magnétique correspondant respectivement à un anneau multipolaire simple classique et à deux anneaux multipolaires selon l'invention.

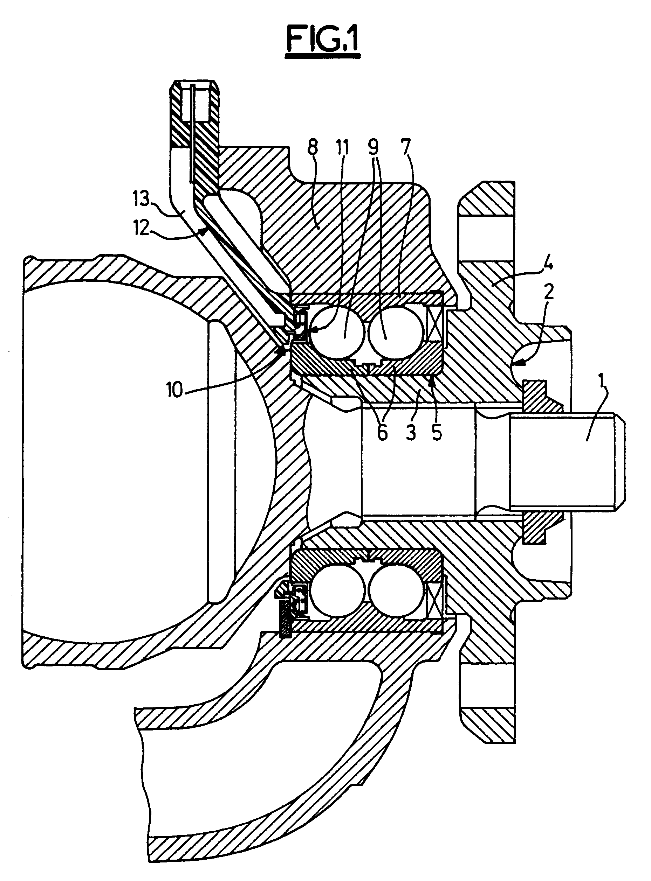

La figure 1 montre une application particulière de l'invention pour la mesure de vitesse de rotation des moyeux de roues de véhicules automobiles équipés d'un système de freinage anti-blocage ou ABS. Le moyeu comprend un axe tournant 1 entraînant en rotation un élément tournant 2 qui présente un flanc radial 3 pour le montage d'une roue de véhicule et d'un plateau de disque ou tambour de frein (non représentés). Sur une partie tubulaire 4 de l'élément tournant 2 est monté un palier à roulement 5 présentant deux bagues intérieures 6 rendues solidaires de l'élément tournant 2, une bague extérieure 7 rendue solidaire d'une partie fixe 8 du véhicule, et deux rangées de billes de roulement 9 entre les bagues intérieures tournantes 6 et la bague extérieure fixe 7.

Un dispositif 10 de capteur de vitesse de rotation est monté sur le côté du palier à roulement 5 à l'opposé du flanc radial 3 de l'élément tournant 2. Le dispositif 10 comprend un élément codeur 11 rendu solidaire d'une bague intérieure tournante 6 et un élément capteur 12 rendu solidaire de la bague extérieure fixe 7 du palier à roulement 5. L'élément capteur 12 est avantageusement intégré dans un bloc moulé en matière plastique qui est emmanché axialement sur la bague extérieure fixe 7 du palier à roulement au moyen d'un insert métallique tubulaire. Ledit bloc peut comporter avantageusement une face d'appui et de référence permettant sa mise en place axiale précise et aisée à l'aide d'un outil d'emmanchement. Une tête de connexion 13 est prévue afin de pouvoir connecter électriquement l'élément capteur 12 à une unité de traitement du signal (non représenté) qui permettra l'exploitation des mesures fournies par le dispositif 10 de capteur de vitesse de rotation pour la conduite du véhicule.

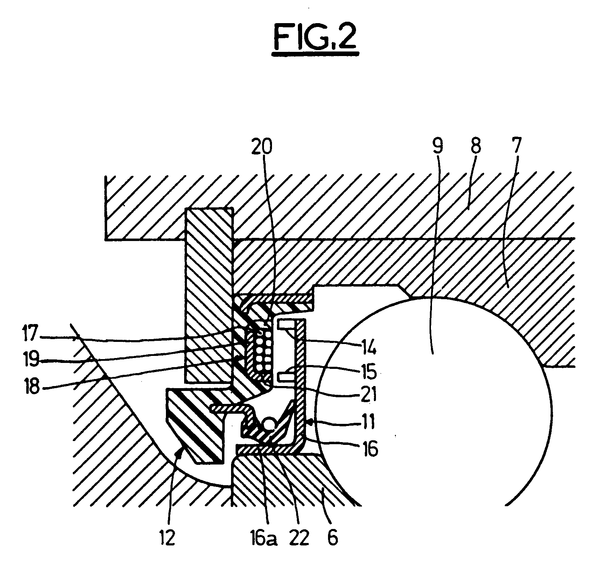

Dans le mode de réalisation montré sur la figure 2, l'élément codeur 11 comprend deux anneaux multipolaires 14 et 15 concentriques espacés radialement l'un de l'autre. Les anneaux extérieur 14 et intérieur 15 sont rendus solidaires d'un flanc radial d'un flasque annulaire 16. Le flasque 16 comprend en outre une partie tubulaire 16a s'étendant axialement et emmanchée sur une bague intérieure 6 tournante du palier à roulement. L'élément codeur 11 ainsi constitué est monté dans l'espace radial entre la bague extérieure fixe 7 et la bague intérieure tournante 6 du palier à roulement. Les anneaux multipolaires 14 et 15 présentant chacun une magnétisation axiale avec un côté utile délimité par un plan radial commun.

L'élément capteur 12 comprend un capteur passif 17 sous forme d'un enroulement coaxial à l'axe de rotation du palier pour constituer une bobine d'induction. De façon avantageuse, l'enroulement est constitué de fils conducteurs avec un revêtement thermoadhérent et/ou thermosoudable. Un concentrateur 18 de flux magnétique, de forme annulaire, enveloppe partiellement la bobine d'induction 17. Le concentrateur 18 est réalisé sous forme d'un flasque avec une âme centrale 19 s'étendant radialement pour former une rondelle dont les bords sont prolongés axialement par deux parties cylindriques coaxiales 20, 21. Les parties cylindriques 20 et 21 du concentrateur 18 sont orientées axialement vers la face libre des anneaux multipolaires 14, 15 de l'élément codeur, avec les diamètres respectifs correspondants sensiblement identiques l'un à l'autre. Une lèvre d'étanchéite 22 est prévue entre l'élément codeur 11 et l'élément capteur 12 d'une part afin de protéger le dispositif de l'invention contre des projections diverses et les intempéries, d'autre part afin d'éviter les fuites de graisse contenue dans le roulement vers le milieu extérieur.

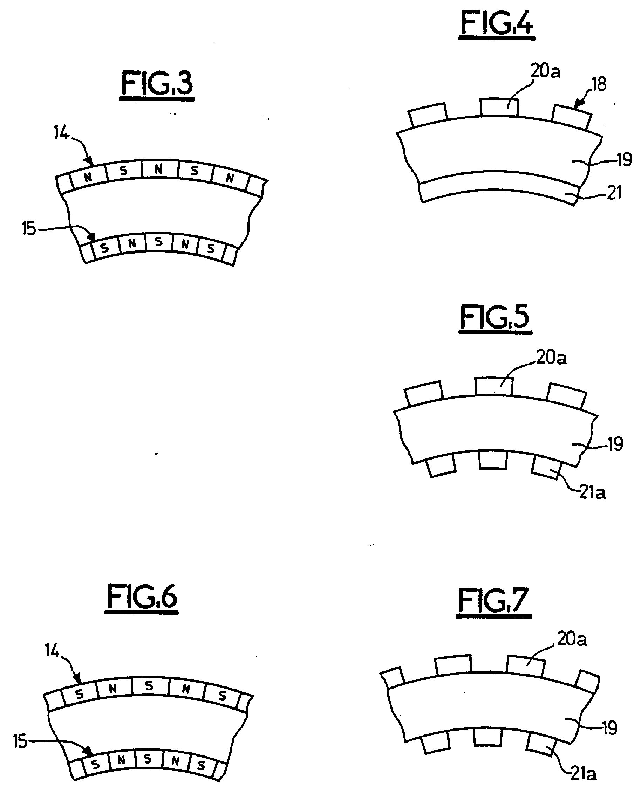

Sur les figures 3 à 6 sont représentées différentes configurations des deux anneaux multipolaires concentriques 14, 15 et du concentrateur 18 de flux magnétique. La figure 4 montre le concentrateur 18 dont la partie cylindrique extérieure 20 est pourvue de dents axiales 20a. La largeur circonférentielle de chaque dent 20a étant de préférence identique à la largeur de chaque pôle magnétique de l'anneau correspondant 14. Il en est de même pour l'espace entre deux dents consécutives du concentrateur. Ainsi, lorsqu'une dent 20a se trouve en face d'un pôle magnétique de l'anneau 14, toutes les dents restantes 20a du concentrateur se trouvent simultanément en face des pôles magnétiques de l'anneau 14 ayant la même polarité. De ce fait, les lignes de champ magnétique générées par l'anneau multipolaire 14 sont captées directement par les dents axiales 20a du concentrateur 18 et sont canalisées par le concentrateur via son âme centrale 19 et sa deuxième partie cylindrique 21 pour enfin être restituées aux pôles magnétiques de l'anneau 15 présentant une polarité opposée à celle des pôles de l'anneau 14 ayant généré le champ. Il existe d'autre part entre les deux anneaux multipolaires une circulation directe des lignes de flux, pratiquement sans déperditions parasites, lesdites lignes de flux étant canalisées naturellement d'un anneau vers l'autre par l'intermédiaire du flanc radial du support ferromagnétique.

On comprendra que le rebouclage des lignes de champ entre le capteur et les anneaux multipolaires est excellent avec par voie de conséquence une intensification du champ capté dans le concentrateur de flux 18 et donc une intensification du signal électrique induit dans la bobine d'induction de l'élément capteur.

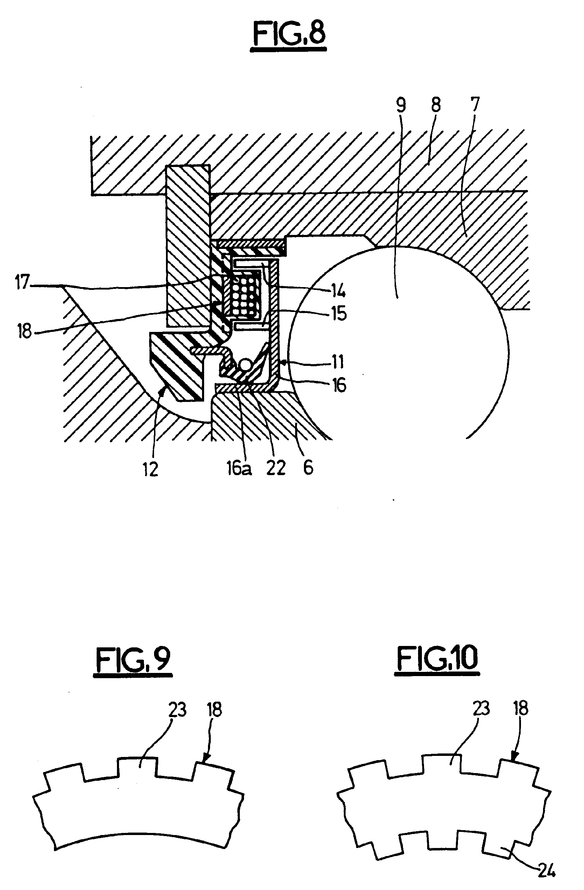

Comme illustré sur les figures 5 et 7, il est possible de réaliser également des dents axiales 21a sur la partie cylindrique 21. Il suffit en effet de réaliser les dents 21a avec les mêmes précautions que les dents 20a en faisant référence à l'anneau multipolaire correspondant 15. Selon la disposition des pôles magnétiques sur les anneaux 14 et 15, les dents 21a peuvent être décalées angulairement ou non par rapport aux dents 20a en vue de réaliser des circuits magnétiques entre deux pôles magnétiques de polarité opposée appartenant respectivement à l'anneau 14 et à l'anneau 15. Pour revenir à la figure 4, il est évidemment possible de réaliser des dents collectrices de flux uniquement sur la partie cylindrique 21 au lieu de la partie cylindrique 20 pour obtenir un résultat identique. Le concentrateur de flux 18 pourvu des dents axiales 20a et/ou 21a peut être utilisé pour un élément codeur classique avec un anneau multipolaire simple, mais avec un rendement plus faible que dans le cas où l'élément codeur comporte deux anneaux multipolaires.

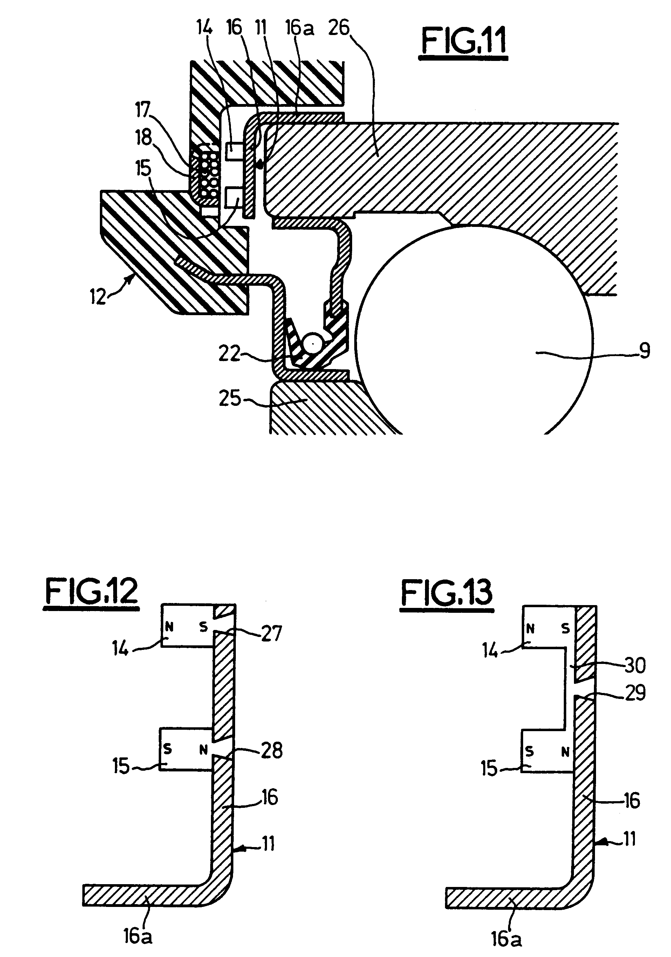

Le mode de réalisation montré sur la figure 8 ne diffère de celui illustré par la figure 2 que par la forme du concentrateur 18 de flux magnétique. Il est en effet possible d'obtenir un résultat équivalent avec les anneaux multipolaires 14 et 15 plus larges axialement pour former un espace dans lequel peut se situer la bobine d'induction 17 de l'élément codeur 12. Ainsi, le concentrateur 18 de flux magnétique peut présenter une forme de rondelle pourvue circonférentiellement de dents 23, 24 réparties de façon régulière et s'étendant radialement vers l'extérieur et/ou vers l'intérieur (figure 9 et figure 10). Les dents 23, 24 du concentrateur 18 servent de branches collectrices des lignes de champ magnétique générées par les anneaux multipolaires 14, 15 de l'élément codeur 11. Comme pour le concentrateur illustré sur les figures 4, 5 et 7, les dents 23, 24 sont dimensionnées en fonction de la largeur de chaque pôle magnétique des anneaux multipolaires 14 et 15.

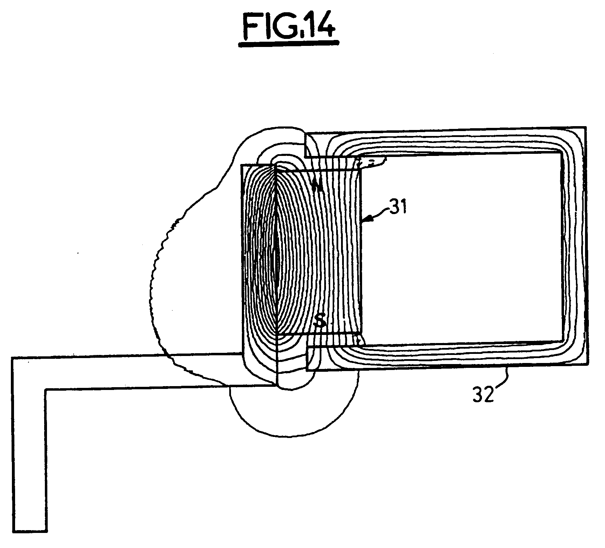

Sur la figure 11 est représenté un autre mode de réalisation du dispositif de l'invention adapté au cas où les bagues intérieures 25 du palier à roulement sont fixes tandis que la bague extérieure 26 est tournante. Dans ce cas, l'élément codeur 11 est emmanché par l'intermédiaire de la partie tubulaire 16a du flasque 16 de support sur la bague extérieure 26 tournante du palier à roulement. L'élément capteur 12 est rendu solidaire de la bague intérieure 25 fixe. Les relations entre l'élément codeur 11 et l'élément capteur 12 demeurent inchangées comparées aux modes de réalisation précédemment décrits.

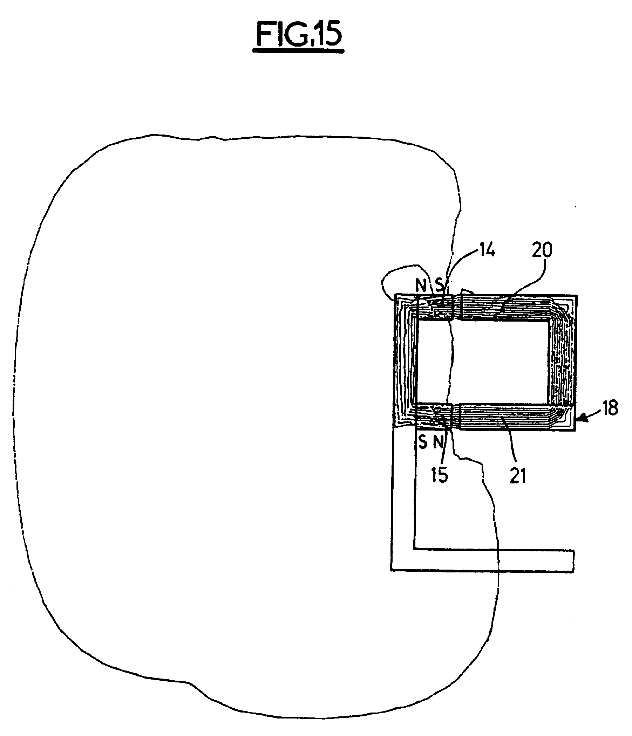

Sur les figures 12 et 13 sont montrés deux modes de réalisation de l'élément codeur 11. Le flasque de support 16 peut présenter des trous d'accrochage 27, 28 réparties circonférentiellement sur deux trajets circulaires dont les diamètres respectifs sont sensiblement les mêmes que ceux des anneaux multipolaires 14, 15 de l'élément codeur 11 à réaliser. Les anneaux 14, 15 peuvent être un élastomère ou une matière plastique surmoulée au niveau des trous d'accrochage 27 et 28. Une fois surmoulés les anneaux concentriques 14 et 15 sont magnétisés axialement à l'aide des moyens appropriés.

Il est également possible de prévoir une seule série de trous d'accrochage 29 répartis circonférentiellement sur un trajet circulaire de diamètre compris entre les diamètres respectifs des anneaux 14 et 15 à réaliser. Le surmoulage peut laisser une zone de liaison 30 entre les anneaux 14 et 15, cela pour renforcer mécaniquement les anneaux 14 et 15 qui seuls seront magnétisés pour constituer la partie active de l'élément codeur 11.

Afin d'illustrer la différence de déperdition des lignes de champ magnétique entre la solution classique et l'invention, les figures 14 et 15 montrent schématiquement la répartition des lignes de champ dans les deux cas. Avec la solution classique (figure 14) consistant en un anneau multipolaire simple 31 comme élément codeur, le concentrateur 32 ne permet de collecter qu'une faible partie des lignes de champs générées par l'anneau 31. Tandis que la présente invention (figure 15) permet une disposition optimale des anneaux multipolaires 14 et 15 en regard des branches collectrices 20 et 21 correspondantes du concentrateur de flux 18, ce qui implique une déperdition des lignes de champs beaucoup moindre que la solution classique.

## Revendications

1. Dispositif (10) de capteur de vitesse de rotation d'un organe tournant (2) monté par l'itermédiaire d'un palier à roulement (5) sur un organe non tournant (8), ledit dispositif comprenant un élément codeur (11) solidaire de la bague tournante (6, 26) du palier et produisant un champ magnétique alterné et un élément capteur (12) solidaire de la bague non tournante (7, 25) du palier et disposé en regard de l'élément codeur avec un entrefer, caractérisé par le fait que l'élément codeur (11) comprend deux anneaux multipolaires (14, 15) concentriques à aimantation axiale, et que l'élément capteur (12) comprend une bobine d'induction (17) coaxiale aux anneaux multipolaires coopérant avec un concentrateur (18) de flux magnétique dont les branches collectrices (20, 21, 20a, 21a, 23, 24) sont orientées axialement face auxdits anneaux multipolaires.

2. Dispositif selon la revendication 1, caractérisé par le fait que les anneaux multipolaires (14, 15) de l'élément codeur (11) sont rendus solidaires d'un flasque annulaire (16) qui présente une partie tubulaire (16a) emmanchée sur la bague tournante (6, 26) du palier à roulement.

3. Dispositif selon la revendication 2, caractérisé par le fait que les anneaux multipolaires (14, 15) sont obtenus par surmoulage d'un élastomère ou d'une matière plastique chargé de particules en matière magnétisable sur le flasque (16) qui présente des zones d'accrochage (27, 28, 29), lesdits anneaux obtenus par surmoulage étant ensuite magnétisés axialement.

4. Dispositif selon l'une des revendications précédentes, caractérisé par le fait que le concentrateur (18) de flux magnétique de l'élément capteur (12) présente une âme centrale (19) s'étendant radialement entre deux parties cylindriques (20, 21) coaxiales dont l'une au moins est pourvue de dents axiales (20a, 21a) régulièrement réparties et orientées face à au mois l'un des anneaux multipolaires (14, 15).

5. Dispositif selon l'une des revendications 1 à 3, caractérisé par le fait que le concentrateur (18) de flux magnétique présente une forme de rondelle dont au moins un bord est pourvu circonférentiellement de dents radiales (23, 24) situées en face axialement de l'un au moins des anneaux multipolaires (14, 15).

6. Dispositif selon la revendication 4 ou 5, caractérisé par le fait que les dents axiales (20a, 21a) ou radiales (23, 24) présentent la même largeur circonférentielle que celle d'un pôle magnétique des anneaux multipolaires ( 14, 15) correspondants, lesdites dents étant séparées les unes des autres par un intervalle de même largeur.

7. Palier à roulement (5) équipé d'un dispositif de capteur de vitesse de rotation selon l'une quelconque des revendications précédentes.

## Patentansprüche

1. Drehzahlmeßaufnehmervorrichtung (10) eines drehenden Teils (2), das vermittels eines Wälzlagers (5) an einem nicht drehenden Teil (8) angebracht ist, wobei die genannte Vorrichtung ein Kodierelement (11), das mit dem drehenden Lagerring (6, 26) des Wälzlagers fest verbunden ist und ein magnetisches Wechselfeld erzeugt, sowie ein Meßaufnehmerelement (12), das mit einem nicht drehenden Lagerring (7, 25) des Wälzlagers fest verbunden ist und dem Kodierelement gegenüberliegend mit einem Luftspalt angeordnet ist, aufweist,
dadurch gekennzeichnet, daß das Kodierelement (11) zwei konzentrische, mehrpolige Ringe (14, 15) mit axialer Magnetisierung aufweist, und daß das Meßaufnehmerelement (12) eine zu den mehrpoligen Ringen koaxiale Induktionsspule (17) aufweist, die mit einem Magnetflußkonzentrator (18) zusammenwirkt, dessen Kollektorschenkel (20, 21, 20a, 21a, 23, 24) den genannten mehrpoligen Ringen axial gegenüberliegend ausgerichtet sind.

2. Vorrichtung nach Anspruch 1, dadurch gekennzeichnet, daß die mehrpoligen Ringe (14, 15) des Kodierelements (11) mit einem Ringflansch (16) fest verbunden werden, der einen rohrförmigen Teil (16a) aufweist, der auf den drehenden Lagerring (6, 26) des Wälzlagers aufgesteckt wird.

3. Vorrichtung nach Anspruch 2, dadurch gekennzeichnet, daß die mehrpoligen Ringe (14, 15) durch Abformen eines Elastomers oder eines Kunststoffs erzielt werden, der mit Teilchen aus einem Material angereichert ist, das auf dem Flansch (16) magnetisiert werden kann, der Einhängbereiche (27, 28, 29) aufweist, wobei die durch Abformen erzielten Ringe sodann axial magnetisiert werden.

4. Vorrichtung nach einem der vorhergehenden Ansprüche, dadurch gekennzeichnet, daß der Magnetflußkonzentrator (18) des Meßaufnehmerelements (12) einen zentralen Steg (19) aufweist, der radial zwischen zwei koaxialen, zylindrischen Teilen (20, 21) verläuft, von denen mindestens einer mit axialen Zähnen (20a, 21a) versehen ist, die gleichmäßig verteilt und wenigstens einem der mehrpoligen Ringe (14, 15) gegenüberstehend ausgerichtet sind.

5. Vorrichtung nach einem der Ansprüche 1 bis 3, dadurch gekennzeichnet, daß der Magnetflußkonzentrator (18) die Form einer Scheibe aufweist, bei der mindestens ein Rand an der Umfangslinie mit radialen Zähnen (23, 24) versehen ist, die wenigstens einem der mehrpoligen Ringe (14, 15) axial gegenüberstehend angeordnet sind.

6. Vorrichtung nach Anspruch 4 oder 5, dadurch gekennzeichnet, daß die axialen Zähne (20a, 21a) oder radialen Zähne (23, 24) die gleiche Umfangsweite aufweisen wie ein Magnetpol der entsprechenden mehrpoligen Ringe (14, 15), wobei die genannten Zähne durch einen Zwischenraum von gleicher Breite voneinander getrennt sind.

7. Wälzlager (5), ausgerüstet mit einer Drehzahlmeßaufnehmervorrichtung nach einem der vorhergehenden Ansprüche.

## Claims

1. A sensor device (10) of speed of rotation of a rotating member (2) mounted by way of a roller bearing (5) on a non-rotating member (8), said device comprising a coder element (11) rigid with the rotating race (6, 26) of the bearing and producing an alternating magnetic field and a sensor element (12) rigid with the non-rotating race (7, 25) of the bearing and arranged facing the coder element with an air gap, wherein the coder element (11) comprises two axially magnetized concentric multipole rings (14, 15), and wherein the sensor element (12) comprises an induction coil (17) coaxial with the multipole rings cooperating with a magnetic flux concentrator (18) whose collector branches (20, 21, 20a, 21a, 23, 24) are oriented axially facing said multipole rings.

2. The device as claimed in claim 1, wherein the multipole rings (14, 15) of the coder element (11) are made rigid with an annular flange (16) which has a tubular part (16a) fitted onto the rotating race (6, 26) of the roller bearing.

3. The device as claimed in claim 2, wherein the multipole rings (14, 15) are obtained by molding an elastomer or a plastic material loaded with particles of a magnetizable material over the flange (16) which has fastening areas (27, 28, 29), said rings obtained by overmolding subsequently being magnetized axially.

4. The device as claimed in one of the preceding claims, wherein the magnetic flux concentrator (18) of the sensor element (12) has a central core (19) extending radially between two coaxial cylindrical parts (20, 21), at least one of which is provided with uniformly distributed axial teeth (20a, 21a) oriented facing at least one of the multipole rings (14, 15).

5. The device as claimed in one of claims 1 to 3, wherein the magnetic flux concentrator (18) has a washer shape at least one edge of which is provided circumferentially with radial teeth (23, 24) situated axially facing at least one of the multipole rings (14, 15).

6. The device as claimed in claims 4 or 5, wherein the axial (20a, 21a) or radial (23, 24) teeth have the same circumferential width as that of a magnetic pole of the corresponding multipole rings (14, 15), said teeth being separated from one another by a gap of like width.

7. A roller bearing (5) equipped with a sensor device of speed of rotation according to any one of the preceding claims.
